# EUROPEAN PATENT APPLICATION

(11) **EP 4 407 545 A1**
(43) Date of publication of application: **31.07.2024**
(21) Application number: 23020042.0
(22) Date of filing: 26.01.2023
(51) Int. Cl.: G06Q 20/06, G06Q 20/22, G06Q 20/32, G06Q 20/38, G06Q 20/40, G06Q 20/34, G06Q 20/36

(54) **SECURE ELEMENT; METHOD FOR REPLACING AN ELECTRONIC TOKEN OF THE SECURE ELEMENT AND SPECIAL SECURE ELEMENT**

(71) Applicant: Giesecke+Devrient advance52 GmbH, 81677 München (DE)
(72) Inventor: HUPEL, Lars, 80809 München (DE); MANTRI, Deepen, 81371 München (DE)
(74) Representative: Giesecke+Devrient IP

(57) **Abstract**

The invention relates to to a method for replacing an electronic token used in an electronic payment transaction system, the method comprising steps each being performed by a secure element of the payment system. The invention also relates to a method for replacing an electronic token used in an electronic payment transaction system, the method comprising steps each being performed by a special secure element of the payment system. The invention further relates to a special secure element.

## Description

The invention relates to a method for replacing an electronic token used in an electronic payment transaction system, the method comprising steps each being performed by a secure element of the electronic payment transaction system. The invention also relates to a method for replacing an electronic token used in an electronic payment transaction system, the method comprising steps each being performed by a special secure element of the electronic payment transaction system. The invention further relates to a special secure element.

Payment transactions and associated payment transaction data must be safe and secure and so, means for protecting confidentiality, integrity, and availability of exchanged payment transaction data must be implemented.

In WO 2020/212 337 A1; WO 2020/212 331 A1; WO 2021 /170 646 A1 and WO 2021 / 170 645 A1, electronic payment systems are described in which tokens can directly be shared between individual payment system participants. The token transferred within such electronic payment system is valid upon direct receipt from another participant without a need of approval or verification via an online connection. Tokens can be modified by each individual participant, e.g., ownership of tokens can be switched from one participant to another participant (SWITCH modification), tokens can be split into plural tokens to reduce a monetary value (SPLIT modification) and/or tokens can be merged to become one token having a higher monetary value (MERGE modification).

Each modification to a token can be - but does not have to be - registered in a verification register, hereinafter also referred to as token register. This token register stores token references of the token but does not store the token itself. The token register is an entity of the electronic payment transaction system but is remote to participants. Thus, the token register may be reached via online connection, e.g., an internet communication and/or well-established protocols, such as TCP, IP, UDP, HTTPS, FTP and/or other suitable .

One design aspect of such payment systems is that a token must be verifiable by each participant in the system at any time. This can be done - online to the token register - upon sending a registration command from the participant (secure element).

If an online connection is not available or inconvenient or should not be used, it is still possible to use a modified token in the payment system. This is possible, because a token may comprise a token history, attached to the token that records a modification. So, it is necessary to generate and attach a token history entry for each modification made with the token in case a registration operation of that modification at the token register, e.g., via an online connection to the token register, is unavailable or inconvenient or should not be used at the time of the modification. A token history may have one or more token history entries each being referred to one modification of the token. A token history entry can also be referred to as a "proof" hereinafter.

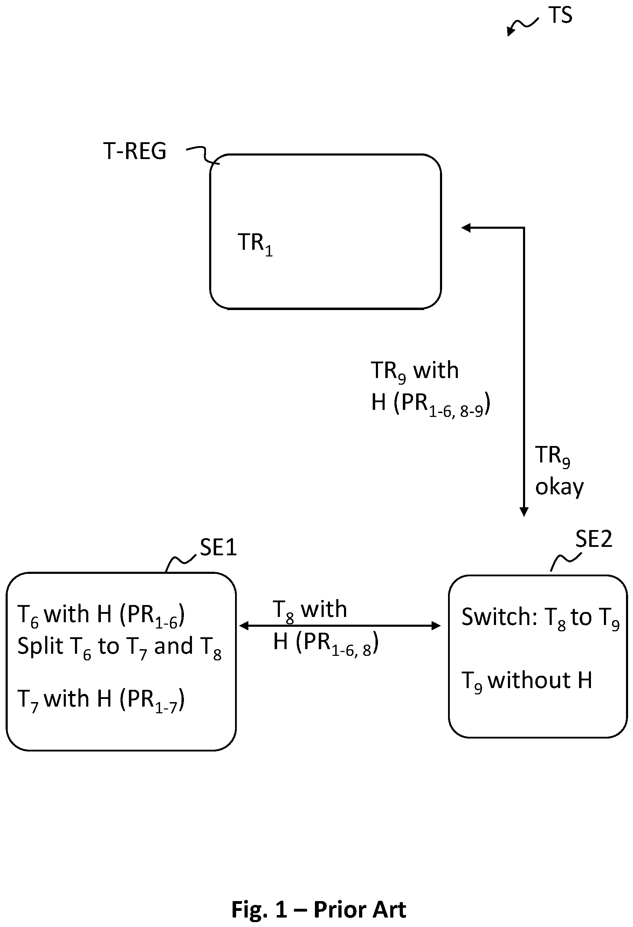

Fig. 1 illustrates a schematic of an exemplary prior art electronic payment transaction system TS comprising two secure elements SE1, SE2 and a token register T-REG. A first secure element SE1 may manage a token T₆. This token T₆ has a token history H. This token history H relates to six previously performed modifications and consequently it has six token history entries (e.g. proofs PR) referred to those six modifications. These modifications can be made prior or after individual payment transactions performed by the modified token(s). It is rather irrelevant whether the first secure element SE1 received the token T₆ in a previous transaction from another secure element or whether it was involved in some or all of the six modifications that result in the token T₆. The first secure element SE1 now e.g. wants to perform a split operation to token T₆ to obtain tokens T₇ and T₈ in order to pay with the resulting token T₈ having a monetary value needed to fulfil a payment. This split operation is the seventh modification of the token. Token T₇ would remain in the sphere of the first secure element SE1 with now seven token history entries H (PR₁₋₇). Token T₈ is transmitted to a second secure element SE2 with now seven token history entries H (PR_{1-6,8}). To verify the validity of the token T₈, the second secure element SE2 can now perform a switch of ownership operation to obtain a token T₉. This switch-operation is the ninth modification related to this token. To register this token T₉, the second secure element SE2 may perform a registration operation including generating a token reference to be validated by the token register T-REG. Positive registration feedback from the token register T-REG leads to token T₉ that does not have any token history H - meaning, the token history H related to the previous modifications can be deleted entirely, since T₉ is now registered.

It goes without saying that the larger the token history is - meaning the more token history entries (modifications related to the token) are attached to or stored with the token itself - the more storage space and computing performance is necessary for storing, managing and/or transmitting/receiving an individual token. Furthermore, since more data needs to be processed and transmitted between individual participants, the time duration for performing a token transfer increases and may lead to unwanted time-out scenarios, e.g. in wireless local payment transaction between secure elements and/or user acceptance is lowered.

Since a secure element is a computing device with limited resources such as storage capacity and processing power, there is need to reduce the data size of a token without reducing security, flexibility, or anonymity of the electronic payment transaction system, especially in scenarios in which an online connectivity to a token register cannot or should not be established.

The payment transaction should still be designed to be secure and simple. A direct and anonymous payment between secure elements should be established. Modifications at the token for flexible payments must still be made possible. A transferred token must be confidential to other system participants not involved in this particular token transfer, but it should allow each system participant to perform basic checks, such as detecting multiple spend attempts or detecting attempts to pay with non-existent monetary amounts.

The above-identified objective is solved with the features of the independent patent claims. Further advantageous embodiments are described in the dependent patent claims.

According to a first aspect of the present solution a secure element is provided.
A secure element for use in an electronic payment transaction system comprises a processor and an interface, wherein at least one offline generated token of the secure element comprises a monetary value and a token generation history. The secure element being adapted to enter a token replacement mode of the secure element for replacing the at least one offline generated token of the secure element, if a threshold value is exceeded. In the token replacement mode the secure element transmitting the at least one offline generated token via the interface and receiving at least one replacement token via the interface, wherein a monetary value transmitted is identical with the monetary value received. In the present solution the token replacement mode is an offline token replacement mode. The threshold value is compared with a token history value of the at least one offline generated token. The at least one offline generated token token is transmitted to a local special secure element of the electronic payment transaction system and the at least one replacement token is received from the local special secure element.

The present approach of replacing an electronic token reduces the token data size/the number of history entries of the token in the security element. The reliable use of the security element in the system and thus improved security can be achieved.

It is advantageous that a merchant entity may comprise a special secure element on which a replacement agent software is implemented as well as another secure element.

The secure element may be used for payment transactions with other participants. The special secure element is dedicated for providing replacement tokens. Preferably the special secure element can be part of a merchant entity, like a merchant terminal. The special secure element may comprise a replacement agent software and optionally also a payment software. It could in addition perform offloading procedures (explained later below). After a replacement process a token having a large history value remains in the sphere of the merchant unit and is not further shared with other participants of the transaction system so that the system itself becomes more performant due to smaller tokens that are transmitted between individual secure elements.

A token managed by the secure element is a token that resides in a memory (storage) space managed by the secure element. The memory space can be an internal memory space of the secure element, or it can be an external memory space to which the secure element has exclusive access rights.

In preferred variants, the secure element stores tokens (or at least the monetary value and the secret token element of tokens) in an internal storage unit of the secure element. In these or further variants the secure element may store the token generation history of tokens (or even tokens, i.e. with all token data elements) in a local, external storage unit.

A token history value is a value of the token history representing at least one or more modifications for generating this token. It is sometimes referred to as a proof of a modification.

The predefined threshold may relate to the storage size of the data of the token that if exceed indicated that the token should be replaced.

The predefined threshold may relate to the age of the token that if exceed indicated that the token should be replaced due to potential expiry.

A token having the exceeded threshold may also be referred to as an encumbered token. Such token comprises a big set of data that requires more storage space and that causes longer time durations needed for individual payment transactions due to higher amounts of data that need to be transferred between payment system participants, e.g. secure elements and/or token register.

A replacement token preferably is a token having an identical monetary value compared with the token to be replaced but it has no token history value or just a very small token history value, e.g. one or two token history entries compared with a to-be-replaced token that has a large number of token history entries. Replacement tokens may also be referred to as fresh tokens. In first variants the monetary value of the one replacement token is identical with the monetary value of the one offline generated token. In second variants the monetary value of the one offline generated token/ replacement token is identical with the sum of the monetary values of the replacement tokens received/ offline generated tokens transmitted. I third variants the sum of the monetary values of the replacement tokens received/ offline generated tokens transmitted is identical to the sum of the monetary values of the offline generated tokens transmitted/replacement tokens received. In general, preferably the number of tokens transmitted is identical with the number of tokens received.

A special secure element, also referred to as super secure element, may be a secure element having a higher level of security and/or a higher level of performance compared with a (normal, not-special) secure element. For instance, the special secure element comprises a higher amount of memory (storage) space, more computing power and/or other special access rights within the payment transaction system if compared with a (normal, not-special) secure element.

Token may be electronic data sets representing central bank digital currency, short CBDC. These tokens are preferably issued by a central bank.

The secure element comprises a normal payment mode in which payment transaction are performed as known in the prior art, cited above. In addition, and according to the invention, the secure element can be switched into the token replacement mode to initiate the replacement of a token that exceeds a certain (predefined) value of token history entries.

The secure element can be adapted - in an online mode - to delete the token generation history of a token after transmitting the token generation history of the token to a token register of the payment transaction system.

Tokens of the electronic payment transaction system may comprise a monetary value and a secret token element. Preferably the secret token element and a public token element of the token form a token element pair. The public token element may be derived from the secret token element and/or forms a token reference in the register.

Tokens of the electronic payment transaction system have to be registered in a token register, preferably with a token reference of the token, the token reference preferably comprising the public token element and/or the monetary value.

The history value may be a count value of token history entries, such as modifications performed that can be tracked by a counter. In case, the count value, e.g., the number of modifications, exceeds the predefined threshold (a certain predefined count value, such as numeric integer value), the replacement mode is entered to replace the token.

The token history value may be a size of a storage required for storing the token including the token history.

Preferably, the token history value corresponds to the storage size of the token generation history or to the number of history entries in the token generation history. In variants one or more offline generated tokens for which the threshold value is exceeded will be replaced. The replacement token(s) may comprise at most two token generation history entries, preferably it comprises no token history entry or only a single token history entry.

The secure element may be adapted to - in an offline payment transaction mode - create and/or receive at least one token history entry of a token generation history for a token generated in an offline transaction. In addition or alternatively the secure element may be adapted to perform a payment transaction with the offline generated token, if the threshold value is not exceeded, or with the replacement token. In the token replacement mode the secure element performs an atomic token replacement transaction (full transaction or nothing).

According to a second aspect of the present solution a method of a secure element is provided.

A method in a secure element of an electronic payment transaction system, the method comprising the following steps:
- entering a token replacement mode of the secure element for replacing at least one offline generated token of the secure element, if a threshold value is exceeded, the at least one offline generated token comprises at least a monetary value and a token generation history;
- transmitting the at least one offline generated token; and
- receiving at least one replacement token, wherein a monetary value transmitted is identical with the monetary value received.
In the present solution the threshold value is compared with a token history value of the at least one token. Furthermore, the token replacement mode is an offline token replacement mode, wherein the at least one offline generated token token is transmitted to a local special secure element of the electronic payment transaction system and the at least one replacement token is received from the local special secure element.

The secure element performing the method can be further adapted as described above.

In preferred solutions the secure element performs one or mor (all) of the following additional steps:
- sending a replacement request including the monetary value of the at least one offline generated token to be replaced to the special secure element;
- prior to transmitting deactivating the at least one offline generated token to be replaced, and reactivating the at least one offline generated token to be replaced, if the at least one replacement token is not received;
- prior to transmitting encrypting the at least one offline generated token and transmitting a corresponding decryption key K2 after receipt of the at least one replacement token.

The token(s) transmitted and/or the token(s) received each may comprise a (token individual) secret token element and the monetary value. Typically, a new secret token element is generated in the secure element in each modification.

As indicated already, the replacement method may be performed prior to or after a payment transaction. Preferably, the replacement token is included in a normal payment transaction between the secure element and another secure element, which is not necessarily but preferably the special secure element.

The method may further comprise a step of comparing, prior to the entering step, the token history value of the token(s) of the secure element with the predefined threshold value.

The method may further comprise the step of remaining in a normal payment mode of the secure element for performing, after the comparing step, the payment transaction with the token, if the comparing step outputs that the token history value does not exceed the predefined threshold value. In such a scenario, a normal payment transaction is performed because the history value of the token undershoots or is equal to the predefined threshold.

Alternatively, the method may further comprise the step of performing, after the receiving step, the payment transaction with the replacement token if the comparing step outputs that the token history value exceeds the predefined threshold value. In this case, a payment transaction could be paused until the replacement of the token has been performed. After receipt of the replacement token, the payment is performed using the replacement token instead of the (to-be-replaced) token.

The replacement token may comprise a token history including a history entry related to a split operation, wherein the split operation being performed by the special secure element. As will be explained in greater details below, the special secure element may have several virgin tokens (fresh token not having a token history, yet) from which the replacement token is split off when performing a split operation to meet the monetary value of the token to be replaced. This split operation is a modification that needs to be logged (saved, stored) within the history of the replacement token unless the replacement token is registered in the token register. In any case, the history of the replacement token is much smaller in size or count of modification compared to the to-be-replaced token. The token history (proof) can be transferred back from the secure element to another secure element during a payment transaction so that an ownership of the replacement token can be proven.

In the receiving step, the replacement token may be received in an encrypted manner together with a token reference of the replacement token. After the receiving step, the method then may comprise one or more of the following further steps: deactivating the to be replaced token by the secure element; transmitting, preferably after the deactivating step, the to be replaced token in encrypted manner as well as a token reference of the to be replaced token to the special secure element; receiving, a cryptographic key for decrypting the replacement token from the special secure element; decrypting the encrypted replacement token using the received cryptographic key; deleting the to be replaced token; and transmitting a cryptographic key for decrypting the to be replaced token to the special secure element.

Such further method steps may reflect an atomic transaction performed between the secure element and the special secure element during the replacement procedure in order to secure that the replacement method is performed either entirely (with deleting steps at the very end on both sides of secure element and special secure element) or the replacement method is rolled-back to its origin without a loss of token on both sides.

The threshold value may be at least one of the following values: a storage size of the to be replaced token; a storage size of storage size available in the secure element; a value representing a number of transactions of the to be replaced token; and an expiry date of the to be replaced token.

If the history token value exceeds the predefined threshold, any payment with such a token may be denied. So, a speed and quality of the payment transaction system can be assured.

In an aspect of the present disclosure a special secure element is provided.
A special secure element for use in an electronic payment transaction system, the special secure element comprising a processor and an interface. The special secure element is adapted to receive at least one offline generated token from a local secure element via the interface, the at least one offline generated token comprising a monetary value and a token generation history; and adapted to transmit at least one token to the local secure element via the interface. In the present solution, the special secure element stores a plurality of vault tokens for use in an offline token replacement process. Furthermore, the special secure element is adapted to perform the offline token replacement process (receiving the at least one offline generated token and transmitting the at least one replacement token), wherein a monetary value transmitted is identical with the monetary value received.

Preferably, the special secure element stores the plurality of vault tokens in a storage unit, the vault tokens being registered in a remote token register of the payment transaction system. The vault tokens may each have the same monetary value.

In a preferred variant the special secure element and/or the local secure element are adapted to generate a modified token having a monetary value using a stored token in an offline mode (including offline transaction mode or the offline replacement mode). In particular the new offline generated (modified) token comprises a newly generated secret token element. In particular, the special secure element is adapted to generate the at least one replacement token using at least one of the vault token in the offline replacement mode.

The storage unit may be a storage unit of the special secure element or a storage unit external from the special secure element. The external storage unit, preferably having a storage capacity higher than the internal storage unit of the secure element.

It is particularly advantageous, if the special secure element is adapted to separately manage and/or store in separate storage areas: vault tokens for use in a replacement and replaced tokens received in a replacement and optionally normal tokens for payment transactions. Vault tokens, replaced tokens and normal tokens may be managed separately and/or they may be stored separately.

In improved embodiments the special secure element is configured to store the monetary value and a secret token element of the received offline generated token in an internal storage unit and to offload the token generation history of the received offline generated token to an external storage unit.

Advantageously the special secure element - in an online mode - is configured to transmit the token generation history of the received offline generated token to a remote token register of the payment transaction system; and/or to generate a vault token using the received offline generated token, preferably by merging the received offline generated token and a remainder token of a split to the new vault token.

In another aspect of the present disclosure there is a method for replacing an electronic token used in an electronic payment transaction system, the method comprises:
receive at least one offline generated token from a local secure element via the interface, the at least one offline generated token comprising a monetary value and a token generation history; and
transmit at least one token to the local secure element via the interface.
Providing a plurality of vault tokens for use in an offline token replacement process. The offline token replacement process, comprising the steps of receiving and transmitting, is performed, wherein a monetary value transmitted is identical with the monetary value received.

This method for replacement performed in the special secure element is the one-to-one counterpart of the above disclosed method for replacement performed in the secure element.

The replacement token may comprise a token history including a history entry related to the split operation.

In the transmitting step, the replacement token may be transmitted in an encrypted manner together with a token reference of the replacement token and wherein after the transmitting step, the method comprises the further steps each being performed by the special secure element: receiving, the to be replaced token in encrypted manner as well as a token reference of the to be replaced token from the secure element; receiving, after the token reference receiving step, a cryptographic key for decrypting the to be replaced token from the secure element; decrypting the encrypted to be replaced token using the received cryptographic key; deleting the replacement token.

The replacement process does not affect the overall balance of the secure element and/or the special secure element.

A part of the general idea is that special secure elements, e.g., merchants special secure element, can keep a lot of vault tokens that do not have (or just have a small) history. On replacement command receipt at the special secure element, the special secure element can exchange the to-be-replaced token having a long/large/big history value for a replacement token that is split from a vault note with the same monetary value (denomination), but a much shorter history.

Using these special secure elements (e.g. a merchants secure element) is based on the assumption that participants routinely shop at merchants, which means that merchants can play a role in solving the data growth issue. Merchants can be incentivized to provide such a replacement service, e.g. by charging a fee. Merchants are able to own and operate these special secure elements, e.g. special chipcards, with additional features, such as more storage space, higher performance, running of replacement agents.

For example, if the secure element is at high percentage (e.g. 90%) of used storage (history value exceeds based on relatively occupied memory space, such as an indirect hint of available storage space), the secure element initiates the replacement by entering the replacement mode in order to send the to-be-replaced-token including the entire history value, which will discard the full history. Immediately thereafter, the secure element gets return a replacement token with a shorter token history.

Advantageously, the replacement procedure can happen together with a normal payment transaction. For example, a secure element has a 10 units token with 20 proofs and wants to transmit 5 units to buy goods at a special secure element. Then, the 10 units token including the 20 proofs can be sent and 5 units replacement token as change + one SPLIT modification proof (as token history) can be returned from the special secure element. In the secure element another SWITCH modification proof may be performed. Implementation can be performed along the lines known for payment transactions, e.g. of WO 2020/212 337 A1; WO 2020/212 331 A1; WO 2021 /170 646 A1 and WO 2021 / 170 645 A1 protocols and by introduction of a new replacement process.

A technical implementation of the method at the special secure element can be performed using computer applets, such as replacement agents, running on the special secure element.

A technical implementation of the replacement procedure can be the inclusion into the special secure element as a software agent. In this case - as mentioned above - it is advantageous if a super participant, such as a merchant participant, has its own secure element and in addition the special secure element on which the replacement agent is running and on which token histories can be offloaded and on which vault token can be stored for splitting of replacement token.

The replacement methods as described above may be seen as operation in which the monetary value of the tokens remain, but the history value is drastically reduced.

The replacement methods may technically be implemented by direct data transfer between the secure element and the special secure element. In addition, a terminal equipment may be used where both, the secure element and the special secure element are attached to or inserted in for e.g. powering up in order to perform these methods. In one implementation, the secure element is incorporated with a first terminal device, e.g. a mobile equipment and the special secure element is incorporated with a second terminal device, whereas both terminals establish a secure communication link through which the data is transferred.

In another aspect of the present disclosure, the method further comprises the steps of transmitting the token history of the to be replaced token and/or the token history of the replacement token from the special secure element to an external storage or a terminal device to which the special secure element is electrically and communicatively coupled.

The method may further comprise the steps of performing a merge operation to merge the monetary value of the to be replaced token and the monetary value of the remainder token, wherein the merged token includes a token history comprising the history entries of the to be replaced token and the split operation and the merge operation; requesting registration of the merged token at a token register of the transaction system; and receiving a register confirmation from the token register.

This method represents a reconciliation of the replacement token via an online connection, ones available. As a design feature, it may be a rule that token-to-be-replaced cannot be used in the payment transaction system due to its enlarged size.

So, also the special secure element needs to perform a registration to reconcile the token.

Such a registration operation can be performed in a bulk mode, e.g., at the end of a business day of the merchant, the special secure element establishes an online connection to the token register to receive all to-be-replaced token at once which may increase management efficiency.

The special secure element may store a plurality of vault token, each vault token having a fixed monetary value from which replacement token can be split of and each vault token have no token history.

Alternatively, individual vault tokens may have different values and so, the probability is increased that a suitable vault token already comprises the monetary value of the to-be-replaced token and so, another split modification/ operation can be avoided.

The to be replaced token may be marked as replaced so that it cannot be used in any payment transaction. This marking can be performed by the secure element during the entering step and/or it can be performed by the special secure element during replacement command receipt.

Each token in the payment transaction system may be represented by a token reference which is registered in a token register of the transaction system.

The token is represented with a secret token element, wherein the secret token element is one part of a pair of token elements, wherein the other part of the pair of token elements is a public token element that is part of a token reference, configured to be registered in a public token register.

In an aspect there is provided a special secure element for use in an electronic payment system comprising a processor for executing program instructions, the computer program instructions defining the steps of one of the preceding method claims; means for accessing a storage unit configured to access token stored in the storage unit; and an interface configured for outputting tokens to another secure element of the electronic payment system.

The special secure element may further comprise a network connectivity; or means for executing an instruction agent that in return is preforming the replacement method as described above.

The special secure element further comprises the accessible storage unit which is either a storage unit of the special secure element; or a storage unit external from the special secure element, each having a storage capacity higher than the storage unit of a secure element (which is not the special secure element).

The special secure element may be configured to keep token with no or with a small token history by offloading a large token history to an external storage unit.

The special secure element may comprise a vault storage configured to store one or more vault tokens.

According to another aspect, a non-transitory computer readable storage medium for special secure elements may comprise a storage for at least one token and its token history to be used in an electronic payment system; a vault storage for storing at least one vault token; and a storage for storing at least one to be replaced token.

According to another aspect, a non-transitory computer readable storage medium for tangibly storing computer program instructions may be capable of being executed by a processor, the computer program instructions defining the steps of one of the preceding methods.

Each token of the payment transaction system may have a monetary value, i.e., a date representing a monetary value of the token, and a secret number, such as a random number, and history values. In addition, the token may have other metadata, such a currency data that indicates the currency which the monetary amount represents. A token is uniquely represented by these data (monetary amount, secret number, history value(s)). Anyone who has access to these data of the token can use this token for payment. Thus, knowing these three data (monetary amount, secret number, history value) is equivalent to owning the digital money. This token can be transmitted directly between two secure elements.

A corresponding token reference is associated with each token in the method and payment transaction system. Knowledge of a token reference does not authorize issuance of the digital money represented by the token. This represents a key difference between token references and tokens. A token reference is unique and also uniquely associated with one token, so there is a 1-to-1 relationship between the token and the token reference. The token reference can be computed. This computing is preferably performed by a processing unit of the secure element or a terminal in which the secure element may reside.

When issuing a token by an issuing entity of the system, a token reference may be issued in parallel by the issuing entity of the payment system to the token register to register the token in the payment system.

The token reference is preferably obtained by applying a one-way function, for example a homomorphic one-way function, for example a cryptographic function. This function is a one-way function, i.e., a mathematical function that is "easy" to compute in terms of complexity theory, but "difficult" to practically impossible to reverse. Here under one-way function also a function is designated, to which up to now no inversion practically executable in appropriate time and with justifiable expenditure is known. Thus, the calculation of a token reference from a token is comparable to or equivalent to the generation of a public key in an encryption method via a residue class group. Preferably, a one-way function is used that operates on a group in which the discrete logarithm problem is difficult to solve, such as a cryptographical method analogous to an elliptic curve encryption, or ECC, from a private key of a corresponding cryptographic method. The reverse function, i.e., the generation of the token from the token reference, is thereby - equivalent to the generation of the private key from a public key in an encryption method over a residue class group - very time-consuming. When in the present document sums and differences or other mathematical operations are mentioned, then in the mathematical sense the respective operations on the corresponding mathematical group are to be understood, for example the group of points on an elliptic curve.

In one embodiment, the one-way function is homomorphic, i.e., a cryptographical method that has homomorphism properties. Thus, mathematical operations can be performed on the token reference that can also be performed in parallel on the token and thus be traced. Using the homomorphic one-way function, calculations with token references can be traced in the monitoring entity without the corresponding tokens being known there.

In a preferred embodiment, the one-way function is a cryptographical encryption function, e.g., based on an asymmetric or symmetric encryption scheme.

When transmitting a token directly between secure elements, both have knowledge of the token. Preventing a double spending (one secure element sends the token to two different secure elements), a switch operation on the token may be executed. The switch can preferably occur automatically when a token is received. In addition, it may also occur upon request, for example, a command from a secure element.

Switching, splitting, and merging are different modifications to the token. These modifications require registering the token reference in the payment system in case the validity should be proven. However, if online connectivity to the register is not possible or inconvenient, a modification proof can also be attached to the token and must be transferred in case the token is transferred and the token is not registered online beforehand

In addition, it is advantageous that the electronic token data sets can be transmitted in any format. This implies that they can be communicated, i.e. transmitted, on arbitrary channels. They do not have to be stored in a determined format or in a determined program.

A mobile terminal, for example a smartphone, may be used as a terminal to power-up a secure element. The secure element may be a physically attachable/ detachable element Alternatively or additionally, the terminal can also be an apparatus, such as a wearable, machine, tool, vending machine or even container or vehicle.

A terminal according to the invention is thus either stationary or mobile. The terminal is preferably adapted to use the Internet and/or other public or private networks. For this purpose, the terminal uses a suitable connection technology, for example Bluetooth, LoRa, NFC and/or WiFi, and has at least one corresponding interface. The terminal may also be adapted to be connected to the Internet and/or other networks by means of access to a mobile network.

In the following, the invention or further embodiments and advantages of the invention are explained in more detail based on drawings, wherein the drawings describe only embodiments of the invention. Identical components in the drawings are given the same reference signs. The drawings are not to be regarded as true to scale, and individual elements of the drawings may be shown in exaggeratedly large or exaggeratedly simplified form:
Fig. 1 A known payment transaction system;
Fig. 2 A payment system according to an exemplary embodiment of the present invention;
Fig. 3 An exemplary embodiment of a diagram for showing the methods of replacing a token in a payment system of Fig. 2 according to the present invention;
Fig. 4 A more detailed section of Fig. 3 showing an atomic transaction as part of the inventive replacement methods;
Fig. 5 An exemplary embodiment of reconciliation of to be replaced tokens;
Fig. 6 An exemplary embodiment of an offloading of a token history.

Fig. 1 has been explained in greater details in the opening section of this patent application and it is referred thereto for further studies.

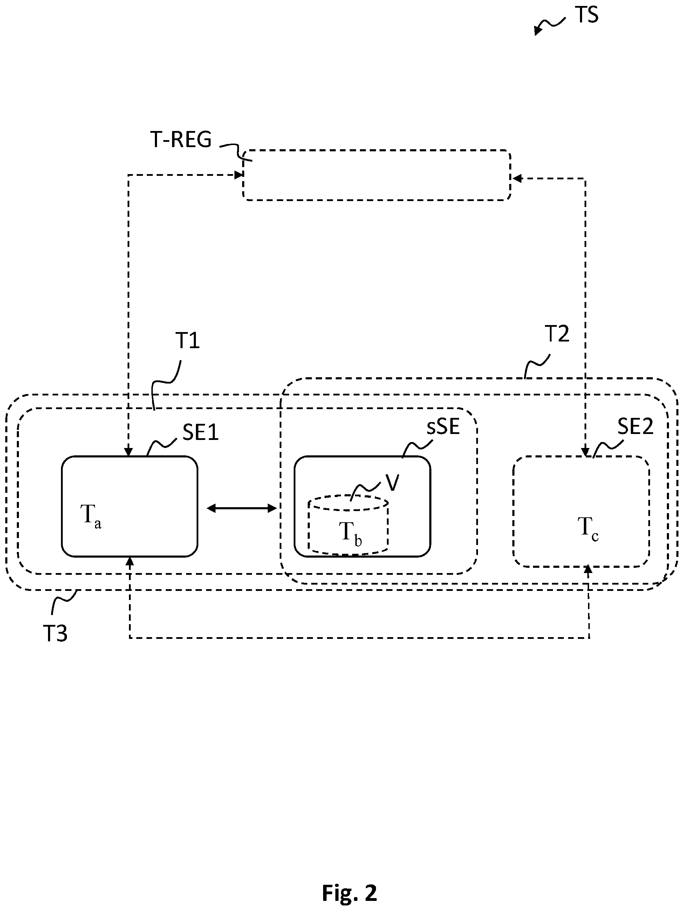

Fig. 2 shows a payment transaction system TS according to an exemplary embodiment of the present invention.

The payment transaction system TS comprises (at least) a first secure element SE1 and (at least) one special secure element sSE. Optional and shown in dashed lines, the system TS may also comprise a second secure element SE2. The payment transaction system TS may comprise further participants, each with or without permanent or temporary online connection.

The secure elements SE1, sSE and/or SE2 may each comprise a local communication interface, e.g. a contactless (such as NFC, Bluetooth (incl. BLE) or WLAN) or contactbased interface (such as USB, ISO 7816, local bus protocol or IP protocol). The secure elements SE1, sSE and/or SE2 may directly communicate with each other or indirectly communicate via a local device, such as a local terminal or coupling device.

For example, SE1 and sSE may be functionally coupled to a terminal T1 temporarily. SE2 and sSE may alternatively be functionally coupled to a terminal T2 permanently or temporarily. SE1, SE2 and sSE may further alternatively be functionally coupled to a terminal T3 temporarily.

A functionally coupling between SE1, SE2, and/or sSE may include an attachment or insertion or incorporation of the corresponding SE1, SE2, sSE into one or more of the terminals T1, T2, T3, respectively.

The system TS will also comprise a token register T-REG. The participants of the system, including SE1, SE2, and/or sSE as well as further participants, however need an online connection in order to communicate with the token register T-REG. The token register T-REG is a remote entity. The participants of the system, including SE1, SE2, and/or sSE as well as further participants, may communicate offline, i.e. locally, with each other.

The special secure element sSE may comprise a vault storage V in which one or more vault token T_{b} are stored. The vault token(s) of the sSE are fresh tokens/are already registered in the token register. The vault tokens are history-free (no token history entry). Alternatively, the vault tokens may comprise at most a single history entry. The sSE stores the vault tokens in order to provide replacement tokens to secure elements in an offline mode.

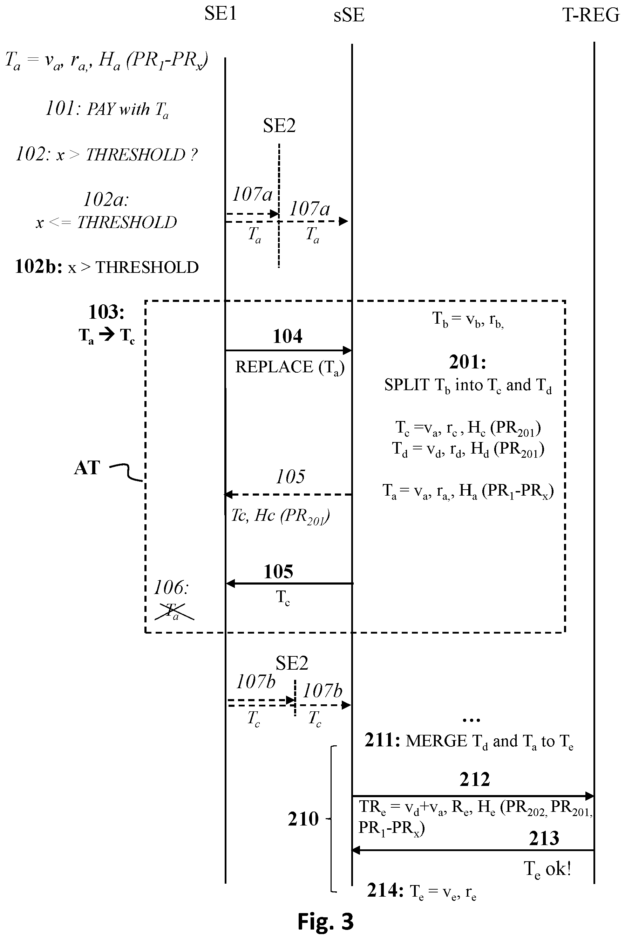

Fig. 3 shows an exemplary embodiment of a method diagram illustrating a method of replacing a token, for example in a payment system TS of Fig. 2, according to the present invention.

It is assumed that SE1 comprises a token Tₐ. This token Tₐ comprises a token history Hₐ. Hence, the token Tₐ has been generated offline. The token history Hₐ of a token grows with the number of subsequent offline transactions. SE1 has not registered the token Tₐ in the token register yet. The token history Hₐ includes at least one token reference of a token registered in the token register. Tokens comprise the token elements vₐ being a monetary value and rₐ being a secret element, e.g. a random number. The secret element rₐ of token Tₐ has been generated by SE1 offline. A token reference is preferably derived from the secret element. The token history Hₐ comprises a plurality x of token history entries PR₁ to PRₓ. At least the oldest token history entry PR₁ includes a registered token reference. In an offline transaction one or more history entries may be created.

It is referred to WO 2020/212 337 A1; WO 2020/212 331 A1; WO 2021 /170 646 A1 and WO 2021 / 170 645 A1 for examples of the possible structure of a token and corresponding token reference as well as possible modifications performed at a token, such as SWITCH, SPLIT, MERGE.

At optional step 101, the SE1 initiates a payment transaction to either sSE (or SE2 - not shown). The payment transaction may be part of a purchase operation in which goods are obtained and money is returned. The token Tₐ is used within the payment transaction.

The secure element SE1 may recognize that the token Tₐ has a history Hₐ and in optional step 102, the SE1 compares a payment history value with a threshold value. Here, the number X of proofs PR as history entries is compared with a predefined threshold value. This threshold value may be set in advance in the SE1 to ensure sufficient storage space and a user-accepted time duration of the payment transaction. This threshold can be input by a user or may be uniquely set for all SE within the payment system TS to ensure a standardized replacement procedure.

If it is determined in step 102 that the number X of proofs PR is lower than the predefined threshold, then no replacement of the token Tₐ is required. Hence, a payment can be performed as usual. In step 107a, the payment transaction is performed using the token Tₐ. The token Tₐ would be transmitted to sSE or SE2 in order to perform the payment transaction 107a.

If it is determined in step 102 that the number X of proofs PR is higher than the predefined threshold, then a replacement of the token Tₐ is required. In this case, the SE1 enters a token replacement mode in step 103. In this token replacement mode, the token Tₐ will be replaced by a replacement token T_{c} having a much smaller, preferably no history H, but the same monetary value vₐ = v_{c}. A special secure element sSE provides replacement tokens T_{c}. Accordingly, the sSE stores multiple vault tokens T_{b} in order to be able to provide replacement tokens T_{c} to secure elements.

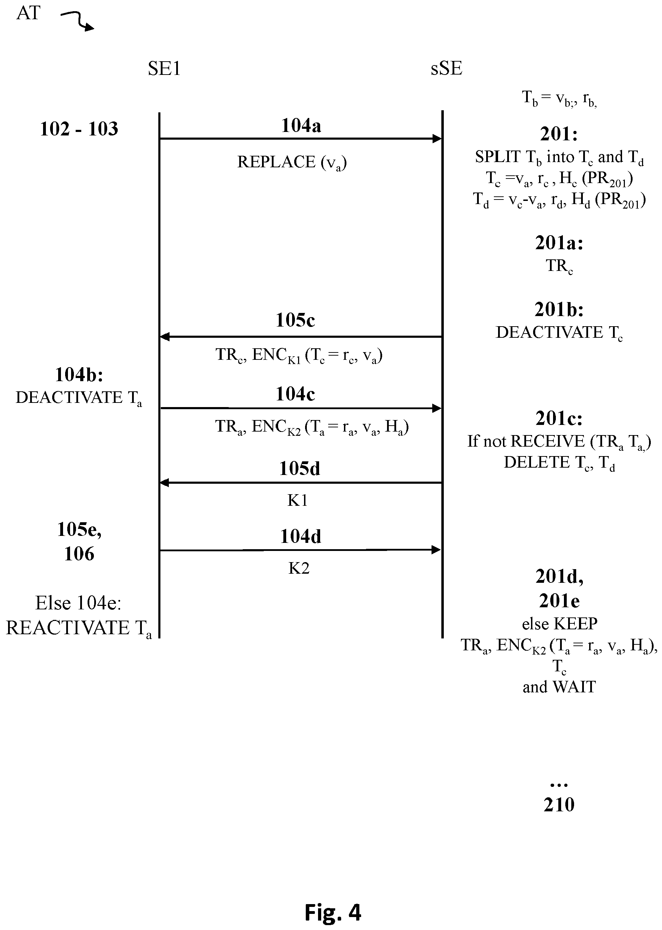

The replacement mode is initiated (entered) with step 103. Thereafter, in step 104, at least parts of the token to be replaced Tₐ is transmitted from the SE1 to the sSE. This transmitting in step 104 can be performed as a replacement command REPLACE (Tₐ) to instruct the sSE to replace this token Tₐ. It is necessary to transmit the entire history Hₐ and the monetary value vₐ. As shown in Fig. 3, the entire token Tₐ with all its token elements is transmitted in this step 104. In contrast, as will be shown in Fig. 4, only parts of token Tₐ may be initially transmitted.

In the sSE there is at least one vault token T_{b}. A vault token T_{b} is a token that has no token history H. It is sometimes referred to as fresh token or fresh note. It may be advantageous to have more than one vault token T_{b} in the sSE. The sSE preferably store more than 8 vault tokens T_{b}. The vault token T_{b} may reside in a vault V of the sSE. A vault token T_{b} has a monetary value v_{b} and a secret number r_{b}, e.g. a random number. If there are more than one vault token T_{b} it may be advantageous that all vault tokens have the same monetary value v_{b}.

In step 201, the sSE performs a split operation to split the vault token T_{b} into the replacement token T_{c} and a remainder token T_{d}.

The replacement token T_{c} has the monetary value vₐ (same as the token to be replaced), a random number r_{c} and a token history H_{c} that has one proof PR₂₀₁ of the split operation. For simplification it is assumed here and in the following that the history entry (PR₂₀₁) of a (split) modification is valid for all tokens resulting from the (split) modification. Of course, the split can be omitted, if v_{b} is equal to vₐ already.

The remainder token T_{d} has the monetary value v_{d} = v_{b} - vₐ, a random number r_{d} and a token history H_{d} that also has the one proof PR₂₀₁ of the split operation. The sSE thus has tokens Tₐ, T_{c} and T_{d}.

In one scenario, the sSE returns in step 105 the replacement token T_{c} with the token history H_{c} (dotted line 105). In this scenario, the replacement token T_{c} has the proof PR₂₀₁. SE1 can use the token T_{c} immediately for further payment transactions (e.g. as initiated in step 101).

In another scenario, the sSE returns in step 105 the replacement token T_{c} without token history. In this scenario, the replacement token T_{c} has no proofs because it is assumed that sSE is faster (than SE1 or SE2) in sending the proof PR₂₀₁ to the register, e.g. via registration of Tₑ. In both scenarios SE1 can use the token T_{c} immediately for further payment transactions (e.g. as initiated in step 101). For example, sSE or SE2 may receive T_{c} (or a new subsequent token based on T_{c}). For both recipients, sSE or SE2, sending the proof PR₂₀₁ to SE1 would become unnecessary, since sSE has this proof already and SE1 as well as SE2 can be expected to get into contact with the register T-REG only later than sSE.

In step 106, the token Tₐ is deleted in the SE1 after token T_{c} is received. In step 107b, the payment transaction may be performed using the replacement token T_{c}. sSE will delete the replacement token T_{c} when received at SE1.

As indicated with three dots (...) in Fig. 3, the sSE lateron communicates with the register T-REG at a point of time which is basically independent of the point of time of the replacement process. The communication with the register may take place hours or days or even a week after the replacement 103-106.

In step 210 the sSE retrieve one (or more) new vault tokens Tₑ. Preferably, in step 210 the sSE creates a new vault token Tₑ and registers it at the register T-REG. Step 210 may also comprise sending the history entry from the split, PR₂₀₁, and/or the token history Hₐ of the replaced token Tₐ.

Fig. 3 illustrates an optimized approach for step 210, which reduces the management effort. It may be advantageous to perform a merge operation 211 to merge the remainder token T_{d} and the replaced token Tₐ to one token Tₑ. The merged token Tₑ has the monetary value v_{b} (same as the initial vault token T_{b}). The merged token further has a secret number rₑ, generated in sSE. Finally it comprises a token history Hₑ that has the token history entries PR₁ to PRₓ of the replaced token Tₐ and the token history entry PR₂₀₁ of the split operation as well as a token history entry PR₂₀₂ of the merge operation.

The sSE registers 212 the merged token Tₑ, preferably its token reference TRₑ, at the register T-REG, which includes sending the token history entries PR1 to PRₓ, PR₂₀₁ and PR₂₀₂ to the register. More preferably, the sSE sends a registration command on the merged token Tₑ with the token history Hₑ. A token reference TRₑ is computed, the token reference comprising the value vₑ and a public number Rₑ, and transmitted together with the token history Hₑ to the token register T-REG. The token register T-REG confirms 213 the registration of Tₑ, e.g. by returning a registration success response, in case the history entries (proofs) can be resolved. sSE may now delete the history Hₑ of the merged token Tₑ which now forms a new vault token Tₑ (Tₑ = vₑ, rₑ).
It should be noted that step 212 could alternatively comprise two or more independent steps. For example independent steps of sending the history entries (PR1 to PRₓ, and/or PR₂₀₁) and registering the merged token Tₑ. Moreover, alternatively to the optimized approach shown in Fig. 3, the sSE may send stored tokens (Tₐ, T_{d}), e.g. to a bank, and in return receive vault tokens, e.g. from the bank (the bank wallet).

Typically, the sSE will perform multiple replacement operations 103-106 with one or more secure elements SE1, SE2, SE3 and lateron, in an independent phase, retrieve 210 multiple new vault notes accordingly.

The implementation of the replacement routine can be made in a wallet software application (or wallet applet) of the SE1 and sSE the repectively. The sSE may however obtain a replacement software agent that observes and manages the replacement method in the sSE, especially the management of the vault token(s) T_{b}. The sSE may thus comprise the replacement software agent and optionally only an additional wallet software application. The wallet application of SE1 (and sSE) and/or the replacement software agent of sSE require (some) additional functionality to support managing the replacement methods.

The sSE in particular now needs to manage different token types and/or the following storages. sSE will include vault tokens required for providing replacement tokens and replaced tokens including their history. sSE may further include normal (or "active") tokens for payments, e.g. handled by means of the wallet software application. Preferably, sSE will comprise a vault token storage containing vault tokens that do not contain any history (or only one or two history entries) and an offline token storage containing replaced tokens each containing (multiple, e.g. more than X) history entries. In addition the sSE may comprise a (normal or active) payment token storage that contains tokens from incoming and/or for outgoing payments. The storages may be separated storage areas.

SE1 could store multiple tokens optionally each having a status: "to be replaced" (e.g. x > threshold) and "active"/"normal" (e.g. x<= threshold). SE1 would not use tokens having the status to-be-replaced in payment transactions anymore.

An atomic transaction AT (=atomic operation) is characterized in that all steps of the transaction are either performed successfully or not performed. Thus, in case of an error either the initial state is reconstructed or the transaction is completed. Hence, in Fig. 3 the atomic transaction AT, including steps 103, 104, 201, 105 and 106, need to be successfully performed (for the replacement). As soon as one step does not provide the expected outcome or fails, either the entire atomic operation AT is re-constructed and the original starting point is re-established in SE1 and in sSE. Alternatively, completion of the started replacement may be achieved, e.g. starting from the failed step.

Fig. 4 illustrates a more detailed version of an atomic replacement transaction AT, which could be used as part of the replacement of Fig. 3.

SE1 stores at least one token Tₐ to be replaced having a token history Hₐ. Steps 102 to 103 may or may not be performed as described in Fig. 3. For example only, the tokens of SE1 may already comprise a status "active" or "to-be replaced".

sSE store multiple vault tokens T_{b}. In step 104a, the SE1 transmits to the sSE a replacement command including the monetary value vₐ (and optionally the entire token history Hₐ) of token Tₐ.

In step 201, the sSE performs the split operation to obtain the replacement token T_{c} and the remainder token T_{d} as described above. In step 201a subsequent to step 201, the token reference TR_{c} of the replacement token Tc is calculated.

In step 201b subsequent to step 201 (and step 201a), the replacement token T_{c} is deactivated in the sSE. This deactivation step ensures that the token T_{c} cannot be reused for another replacement proves by the sSE. The deactivation may be implemented as an access rule, namely that a replacement agent application of sSE cannot re-use the token anymore.

In step 105c subsequent to step 201b, the token reference TR_{c} and an encrypted replacement token T_{c} is transmitted from the sSE to the SE1. The replacement token T_{c} is encrypted with an encryption key K1 that is not known to the SE1, yet.

In step 104b subsequent to step 105c, the token Tₐ is deactivated by the SE1. This deactivation step ensures that the token Tₐ cannot be spent by the SE1. The deactivation may be implemented as an access rule, namely that a wallet application of SE1 cannot access the token anymore.

In step 104c subsequent to step 105c, a token reference TRₐ (computed beforehand) and the encrypted (now entire) token Tₐ is transmitted from the SE1 to the sSE. The token Tₐ is encrypted with an encryption key K2 that is not known to the sSE, yet.

In step 201c subsequent to step 201b, it is checked by the sSE whether the token reference TRₐ and the encrypted token Tₐ is received. If not, then the replacement token T_{c} and the replacement token T_{d} are deleted and the replacement is aborted. Than SE1 either directly - after being informed by sSE - or indirectly - after not receiving K1 - at step 104e re-activates the token Tₐ. Accordingly, the tokens of an thereby SE1 and sSE have returned to their initial state (prior to step 104a).

If reference TRₐ and the encrypted token Tₐ are received at the sSE, the sSE in step 105d sends the encryption key K1 to the SE1.

In step 105e, the SE1 decrypts the replacement token T_{c} and deletes the token Tₐ in step 106. If decryption fails or K1 is not received in SE1, the SE1 reactivates token Tₐ (step 104e).

In step 104d, subsequent to step 105d and/or 105e, the SE1 transmits the encryption key K2 to the sSE. In step 201d, the sSE decrypts the replaced token Tₐ and stores it. In step 201e, the replacement token T_{c} is deleted in the sSE.

In case, the decryption does not work or no encryption key K2 is received in the sSE, the token reference TRₐ and the encrypted token Tₐ (and the token Tc) is kept. Subsequently it is observed (for days or weeks or unlimited) wether T_{c} and/or Tₐ is used in the token register T-REG. The sSE and/or the register may monitor the use.. If T_{c} is used, the replacement was successful. If Tₐ is used, the replacement was not successful. Hence, for example sSE could delete the encrypted token Tₐ and reactivate token T_{c}.

As indicated with three dots again, at an independent point of time after the replacement process 104a - 106, 201-201e, the sSE may retrieve new vault tokens 210, and/or send the history of tokens to the register, e.g. by merging the tokens (see Fig. 3 or alternatives).

It should be noted that Fig. 4 illustrates only a possible embodiment of the atomic transaction AT. Other embodiments, e.g. not using a key K1 (and/or K2) but relying on the secure channel between SE1 and sSE or not using deactiviation, are possible.

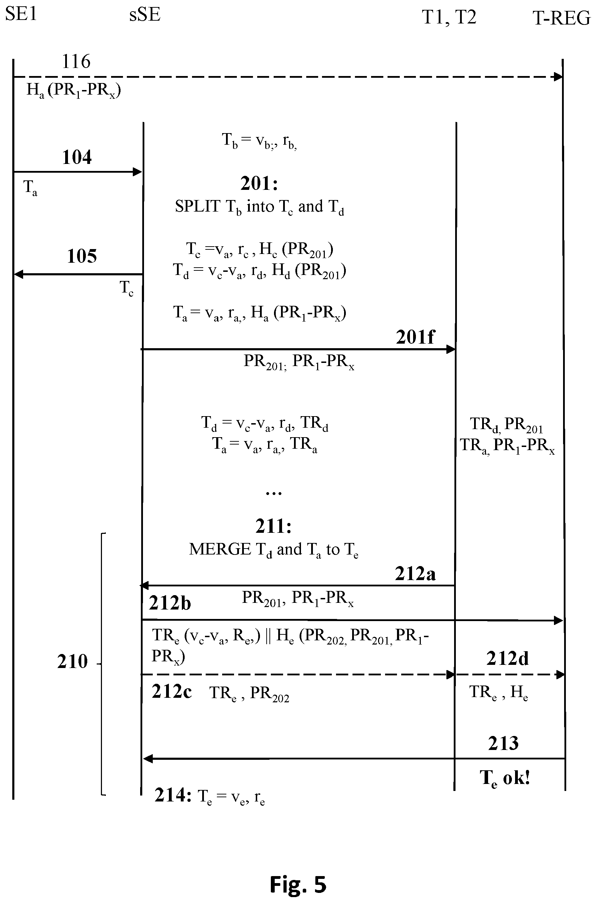

Fig. 5 illustrates an exemplary embodiment of temporary offloading the token history of a token from a secure element to an external device.

In the example of Fig. 5 the token history is temporary offloaded from the special secure element sSE to a terminal T1 or T2 (including the sSE or being assigned to the sSE). For the sake of simplification, the example is presented in the context of a replacement process, namely the process of Fig. 2 or 3. However, as will also become apparent from the following, the temporary offloading of the token history to an external device is an independent process which could be performed by any secure element of the payment system, e.g. SE1 or SE2.

Secure elements of the system, such as SE1, would register its token Tₐ and/or send the token history Hₐ of the token Tₐ to the register T-REG in alternative step 116 (dotted lines indicating an alternative in the figure), if a connection to the register would be available. A replacement of tokens of the secure element, as proposed herein, would not occur under these circumstances.

By performing one or more replacements 104-105, 201 the sSE aggregates many history entries.

In step 201f, the history Hₐ, H_{d} of one or more tokens Tₐ, Td of the secure element sSE is temporary offloaded to an external storage of the sSE. The offloaded history Hₐ, H_{d} could be either re-loaded if required (see step 212a) for being send to the register, send to the register from the external storage directly (not shown in Fig. 5), e.g. by terminal T1 or T2, or added to a request from sSE sent to the register (see steps 212c and 212d).

The external storage can be a designated storage only manageable by the sSE and/or a part of the memory of the terminal T1 or T2. The history entries PR₁-PRₓ,PR₂₀₁ can be offloaded to reduce occupied data size at the sSE.

Temporary offloading in general is known in the field of secure elements. Typically, the secure element encrypts data and externally stores the encrypted data, while keeping the decryption key in the secure element. Since the history entries of tokens do not have to be protected against unauthorized reading, encryption would not be required (is a possible option only). However, the temporary offloaded data should be integrityprotected, e.g. by a cryptographic checksum or signature. Furthermore, even in case that history entries are lost or tampered with, the sSE may lose balance. But since SE1 with replacement token T_{c} has actually a valid token, there is no suffer from any data loss at a sSE for users of the system.

The terminal T1, T2 or sSE may initiate the temporary offloading procedure. The sSE transmits the proofs of the tokens to the terminal T1, T2, T3 and now can discard the proofs internally. sSE keeps the token(s) Tₐ and/ or T_{d} without the history, e.g. keeps the basic token data elements v, r only. As indicated in Fig. 5 the history entries PR₂₀₁ and PR₁-PRₓ may be stored together with a reference, preferably the token reference TRₐ, TR_{d}. sSE implicitly or by storing the (token) reference TRₐ, TR_{d} together with the basic token vₐ, rₐ; v_{d}, r_{d}, knows that the history has been offloaded temporarily.

In subsequent independent phase(s) 210, new vault token(s) Tₑ are provided for sSE. After re-loading 212a the history of merged tokens Tₐ and T_{d}, sSE may send 212b the complete registration request for the token Tₑ to the token register T-REG. T-REG preferably registers TRₑ as a valid token reference. T-REG confirms 213 registration of the token Tₑ. Thereafter Tₑ is stored 214 as a new vault token Tₑ of sSE.

An already indicated alternative to steps 212a and 212b would be steps 212c and 212d. The sSE creates and sends 212c a request for registration of the token Tₑ comprising TR_{e and} PR₂₀₂. The terminal T1, T2 adds the history Hₑ, including Hₐ and H_{d}. Basically, a supplemented registration request is sent 212d to the register T-REG.

Any secure element may perform such temporary offloading 201f of the history of a token to an external device, for lateron registering 212b or 212d the token at the token register T-REG.

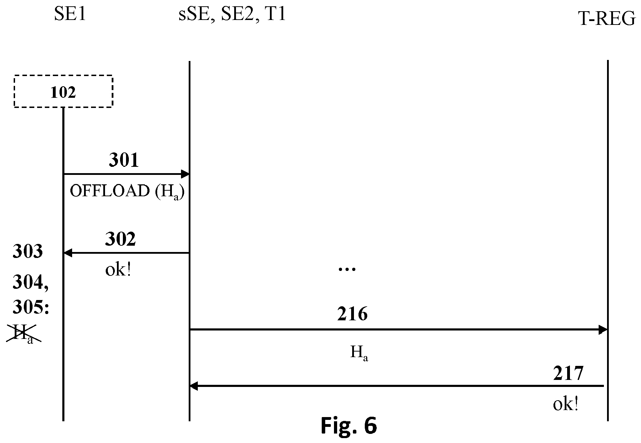

Fig. 6 illustrates an exemplary embodiment of an offloading process of a token generation history from a secure element SE1 to a dedicated offloading device, e.g. a special secure element sSE, a second secure element SE2 or a Terminal T1. The process of Fig. 6 can be used regardless of or in addition to the offline token replacement described above and/or regardless of or in addition to an temporary offloading (see description of Fig. 5).

As discussed for step 116 of Fig. 5, the token generation history Hₐ of a token of the secure element SE1 in an online situation may be transmitted to the T-REG. Hence, if an online connection to the register is unavailable, the token history may remain in SE1.

If a dedicated offloading device is available, the token generation history Hₐ may be offloaded 301 to the dedicated offloading device sSE, SE2, T1, which will transmit 216 the token generation history Hₐ to the token register T-REG later.

Fig. 6 shows two temporally independent processes, an offloading process 301-305 and the history transfer (or registration) process 216-217.

In step 301, the SE1 sends the token generation history Hₐ of one or more tokens Tₐ of the secure element SE1 to the dedicated offloading device sSE, SE2, T1, e.g. using an offloading command. Hence, it could be one token generation history Hₐ of one token Tₐ which is transmitted or the token generation histories Hₐ₁ to Hₐₙ of respective tokens Tₐ₁ to Tₐₙ which are transmitted. The offloading device temporary stores the at least one token generation history Hₐ and confirms 302 the offloading.

In a first alternative, the secure element SE1 after receiving 302 the confirmation deletes 305 the token generation history Hₐ. In a second alternative, the secure element SE1 deletes 305 the token generation history Hₐ (or token history entries of the token generation history) only after a deletion condition is fulfilled. The deletion condition is checked 303, e.g. by comparing an offload information of the token history (entries) with the deletion condition, and the deletion 305 performed if the condition is fulfilled. If the condition is not yet fulfilled an offload information is amended 304, e.g. the value increased or an offload counter incremented. For example, SE1 could delete the history after 3 successful offloadings. The offloading process 301-305 between the secure element SE1 and the offloading device ends with one of steps 304, 305.

The deletion condition could for example be a number of successful offloading processes, preferably to different offloading devices. This number may be an integer value between 2 and 10, preferably between 3 and 5. If the deletion condition is for example three offloads, the token generation history Hₐ would be deleted after the third offload, e.g. the offload counter reaching the value three or a third device identifier of an offloading device being stored. In another example the deletion condition could be a given level, preferably transmission probability level, e.g. likelihood of 100% for transmission to T-REG within 48 hours. Thus the deletion condition could be reached after a single offload, e.g. when the dedicated device has online connection once a day. Alternatively the same condition may only be reached after multiple offloads to different offloading devices (50% + 33% + 25% > 100%) each having assigned a lower device dependent value (such as 50% or 33% or 25% likelihood for transmission to T-REG within 48 hours).

As indicated with "..." in Fig. 6, the dedicated offloading device will send 216 the at least one token generation history Hₐ to the token register T-REG later, for example after x hours, within 24 hours or within 3 days. In step 217 T-REG will confirm receipt and/or validation of the transmitted token generation history Hₐ.

The dedicated offloading device will be offline during the offloading process 301-305. It may have online connectivity temporarily only, for example it may use a shared online subscription in a given timeslot only or use an online connector which is switched on temporarily. Alternatively it may be externally provided with online connectivity only temporarily, for example by being temporarily transported to another position or by an external online connector (such as mobile/ satellite phone) being temporarily provided at its position.

In particular for the embodiment of Fig. 6, a token T in the secure element SE1 may have further token elements, besides the monetary value v, the secret value r and a token generation history H.

The token generation history of a token may additionally comprise offload information. The offload information may be assigned to the token generation history, for example PR₁ to PRₓ, or to certain entries of the token generation history, for example PR₁ to PR3 of PR₁ to PRₓ. Hence, different entries of the token generation history may comprise different offload information. History entries PR₁ to PR₃ may have been offloaded twice already, whereas history entries PR₄ to PRₓ have been offloaded once only, wherein the deletion condition could be "three offloads". As indicated above the offload information may comprise the device identifiers of the offload devices and/or may comprise the current transmission probility, for example 88% (of 100% required) after two offloads contributing 55% and 33% respectively.

Furthermore, after deletion the token may optionally comprise one or more ID or hash or other unique identifier of deleted token generation history (entries).

Any secure element may perform such offloading 301-305 of the history of its token to a dedicated offloading device. The dedicated offloading device sSE, SE2, T1 will lateron transfer 216-217 the history to the token register T-REG. The secure element relies on this transfer after offloading.

### REFERENCE SIGNS

- TS: electronic transaction system
- SE: Secure element
- sSE: Special secure element
- Ta: token to be replaced
- Tb: vault token
- Tc: replacement token
- Td: remainder token
- va,vb: monetary value
- ra: secret token element of token element pair
- Ra: public token element of token element pair
- H: token history,
- PRx: history entry, proof of token modification
- K: Cryptographic key
- T-REG: Token register
- T1, T2, T3: Terminal, external storage
- V: vault storage
- AT: Replacement as atomic transaction

- 101: Initiate payment transaction
- 102: Comparing payment history value with threshold value
- 102a: threshold not reached
- 102b: threshold reached
- 103: Enter replacement mode
- 104: Transmit at least parts of token to be replaced
- 105: Receive replacement token
- 106: Delete token
- 107a: Perform payment transaction with token
- 107b: Perform payment transaction with replacement token

- 201: Split operation on fresh token
- 210: Retrieve fresh token
- 211: Merge operation on remainder token and token
- 212: Register token reference of merged token
- 213: Confirmation
- 214: Merged token forms fresh token
- 104a: Transmit monetary value
- 104b: Deactivate token
- 104c: Transmit token reference and encrypted token
- 104d: Transmit key
- 105c: Receive replacement token reference and encrypted replacement token
- 105d: Receive key
- 105e: Decrypt and store replacement token

- 201a: Compute token reference of replacement token
- 201b: Deactivate replacement token
- 201c: Check receipt of token reference and encrypted token
- 201d: Decrypt and store token
- 201e: Delete replacement token

- 116: Transmit token history to T-REG
- 201f: Externally store history

- 301: Offload token history
- 302: Receive confirmation
- 303: Number of successful offloads reached
- 304: Amend offload information
- 305: Delete token history

- 216: Transmit token history to T-REG
- 217: Receive confirmation

## Claims

1. Secure element (SE) for use in an electronic payment transaction system (TS), the secure element (SE) comprising a processor and an interface, wherein
at least one offline generated token (Tₐ) of the secure element (SE) comprises a monetary value (vₐ) and a token generation history (Hₐ);
the secure element being adapted to enter a token replacement mode of the secure element (SE) for replacing the at least one offline generated token (Tₐ) of the secure element (SE), if a threshold value is exceeded;
in the token replacement mode the secure element transmitting the at least one offline generated token (Tₐ) via the interface and receiving at least one replacement token (T_{c}) via the interface, wherein a monetary value (v_{a;} Σvₐ) transmitted is identical with the monetary value (v_{c;} Σv_{c}) received;
**characterized in that**
the token replacement mode is an offline token replacement mode;
the threshold value is compared with a token history value (X) of the at least one offline generated token (Tₐ);
the at least one offline generated token token (Tₐ) is transmitted to a local special secure element (sSE) of the electronic payment transaction system (TS); and
the at least one replacement token (T_{c}) is received from the local special secure element (sSE).

2. The secure element (SE) according to claim 1, **characterized in that**
- the secure element (SE) is adapted in an online mode to delete the token generation history of a token after transmitting the token generation history of the token to a token register (T-REG) of the payment transaction system (TS); and/or
- tokens (Tₐ,T_{c}) of the electronic payment transaction system (TS) comprise a monetary value (v) and a secret token element (r), wherein preferably the secret token element (r) and a public token element (R) of the token form a token element pair; and/ or
- tokens (Tₐ,T_{c}) of the electronic payment transaction system (TS) have to be registered in a token register (T-REG) with a token reference (TRₐ, TR_{c}) of the token (Tₐ,T_{c}), the token reference (TRₐ, TR_{c}) preferably comprising the public token element (R) and/or the monetary value (vₐ, v_{c}).

3. The secure element (SE) according to claim 1 or 2, **characterized in that**
- the token history value (X) corresponds to the storage size of the token generation history or to the number of history entries in the token generation history; and/ or
- offline generated tokens for which the threshold value is exceeded will be replaced; and/or
- the replacement token (T_{c}) comprises at most two token generation history entries, preferably comprises no token history or only a single token history entry.

4. The secure element (SE) according to one of the preceding claims, **characterized in that** the secure element (SE) being adapted
- in an offline payment transaction mode to create and/or receive at least one token history entry of a token generation history for a token generated in an offline transaction; and/or
- to perform a payment transaction with the offline generated token (Tₐ), if the threshold value is not exceeded, or with the replacement token (T_{c}); and/or
- in the token replacement mode to perform an atomic token replacement transaction.

5. The secure element (SE) according to one of the preceding claims, **characterized in that**
- the secure element (SE) stores tokens (Tₐ,T_{c}) or at least the monetary value (v) and the secret token element (r) of tokens (Tₐ,T_{c}) in an internal storage unit of the secure element (SE); and/or
- the secure element (SE) stores the token generation history (Ha) of tokens (Tₐ) or tokens (Tₐ,T_{c}) in a local, external storage unit.

6. The secure element (SE) according to one of the preceding claims, **characterized in that**
- the monetary value (v_{c,}) of the one replacement token (T_{c}) is identical with the monetary value (vₐ) of the one offline generated token (Tₐ), or
- the monetary value (v_{a,;}v_{c}) of the one offline generated token/ replacement token (T_{a;}T_{c}) is identical with the sum of the monetary values (Σvₐ; Σv_{c}) of the replacement tokens received/ offline generated tokens transmitted, or
- the sum of the monetary values (Σvₐ; Σv_{c}) of the replacement tokens (T_{c}) received/ offline generated tokens (Tₐ) transmitted is identical to the sum of the monetary values (Σv_{c}; Σvₐ) of the offline generated tokens (Tₐ) transmitted/replacement tokens (T_{c}) received, wherein preferably the number of tokens transmitted is identical with the number of tokens received.

7. A method in a secure element (SE) of an electronic payment transaction system (TS), the method comprising the following steps:
- entering (103) a token replacement mode of the secure element (SE) for replacing at least one offline generated token (Tₐ) of the secure element (SE), if a threshold value is exceeded, the at least one offline generated token (Tₐ) comprises at least a monetary value (vₐ) and a token generation history (Hₐ);
- transmitting (104) the at least one offline generated token (Tₐ); and
- receiving (105) at least one replacement token (T_{c}), wherein a monetary value (vₐ) transmitted is identical with the monetary value (v_{c}) received;
**characterized in that**
the threshold value is compared with a token history value (X) of the at least one token (Tₐ);
the token replacement mode is an offline token replacement mode;
the at least one offline generated token token (Tₐ) is transmitted to a local special secure element (sSE) of the electronic payment transaction system (TS); and
the at least one replacement token (T_{c}) is received from the local special secure element (sSE).

8. The method of claim 7, **characterized in that** the method is performed by a secure element according to one of claims 1 to 6; preferably further comprising at least one of the steps:
- sending (104a) a replacement request including the monetary value of the at least one offline generated token (Tₐ) to be replaced;
- prior to transmitting (104c) deactivating (104b) the at least one offline generated token (Tₐ) to be replaced, and reactivating (104b) the at least one offline generated token (Tₐ) to be replaced if the at least one replacement token (T_{c}) is not received;
- prior to transmitting (104c) encrypting the at least one offline generated token (Tₐ) and transmitting (104a) a corresponding decryption key K2 after receipt (105; 105c, 105d) of the at least one replacement token (T_{c}).

9. A special secure element (sSE) for use in an electronic payment transaction system (TS), the special secure element (sSE) comprising a processor and an interface, wherein the special secure element (sSE) is adapted to
receive at least one offline generated token (Tₐ) from a local secure element (SE) via the interface, the at least one offline generated token (Tₐ) comprising a monetary value (vₐ) and a token generation history (Hₐ); and
transmit at least one token to the local secure element (SE) via the interface;
**characterized in that**
the special secure element stores a plurality of vault tokens (T_{b}) for use in an offline token replacement process; and
the special secure element (sSE) is adapted to perform the offline token replacement process, wherein a monetary value (v_{a;} Σvₐ) transmitted is identical with the monetary value (v_{c;} Σv_{c}) received.

10. The special secure element (SE) according to claim 9, **characterized in that**
the special secure element (SE) stores the plurality of vault tokens (T_{b}) in a storage unit (V), the vault tokens (T_{b}) being registered in a remote token register (T-REG) of the payment transaction system (TS), the vault tokens (T_{b}) preferably each having the same monetary value; and/or
the special secure element (SE) and/or the local secure element (SE) are adapted to generate a modified token (T_{c}) having a monetary value using a stored token (T_{b}) in an offline mode; and/or
the special secure element (SE) is adapted to generate the at least one replacement token (T_{c}) transmitted using at least one of the vault tokens (T_{b}) in the offline replacement mode.

11. The special secure element (sSE) according to claim 10, **characterized in that**
the storage unit is either a storage unit of the special secure element (sSE) or a storage unit external from the special secure element (sSE), preferably having a storage capacity higher than a storage unit of the secure element (SE); and/or
the special secure element is adapted to separately manage and/or store in separate storage areas: vault tokens for use in a replacement and replaced tokens received in a replacement and optionally normal tokens for payment transactions.

12. The special secure element (sSE) according to one of claims 9 to 11, **characterized in that** the special secure element (sSE) is configured to offload the token generation history (Hₐ) of the received offline generated token (Tₐ) to an external storage unit and to store the monetary value (vₐ) and a secret token element (r) of the received offline generated token (Tₐ) in an internal storage unit.

13. The special secure element (sSE) according to one of claims 9 to 12, **characterized in that** the special secure element (sSE) in an online mode is configured to
transmit the token generation history (Hₐ) of the received offline generated token (Tₐ) to a remote token register (T-REG) of the payment transaction system (TS); and/or
generate a vault token (T_{b}) using the received offline generated token (Tₐ).

14. A system (SE, sSE; TS) comprising at least one special secure element (sSE), and at least one secure element (sSE), the system being adapted in accordance with one of the preceding claims, optionally further comprising a token register (T-REG), wherein preferably each token (T) is represented by a token reference (TR), the token reference being registered in the token register (T-REG).

15. A non-transitory computer readable storage medium for tangibly storing computer program instructions capable of being executed by a processor, the computer program instructions defining the steps performed in the offline replacement mode according to one of the preceding claims.
